# EUROPEAN PATENT SPECIFICATION

(11) **EP 0 979 576 B1**
(45) Date of publication and mention of the grant of the patent: **01.08.2001**
(21) Application number: 98917773.8
(22) Date of filing: 29.04.1998
(51) Int. Cl.: H04N 5/225

(54) **CAMCORDER**
KAMERAREKORDER
CAMESCOPE

(30) Priority: 02.05.1997 KR 1697597
(43) Date of publication of application: 16.02.2000
(73) Proprietor: Samsung Electronics Co., Ltd., Suwon City, Kyungki-do 442-370 (KR)
(72) Inventor: CHO, In-sung, Kyonggi-do 463-500 (KR); YOON, Hee-joung, Suwon, Kyonggi-do 442-370 (KR)
(74) Representative: French, Clive Harry
(86) International application number: KR9800107
(87) International publication number: WO9851074

(56) References cited:
- EP-A- 0 671 849
- PATENT ABSTRACTS OF JAPAN, Vol. 18, No. 608, (E-1633), 1994; & JP,A,06 233 160 (MITSUBISHI) 18 November 1994.

## Description

### BACKGROUND OF THE INVENTION

### Field of the Invention.

The present invention relates to a camcorder, and more particularly to a camcorder equipped with a viewfinder which is attachably/detachably connected to a camcorder having an LCD screen.

### Description of the Related Art

In a conventional camcorder, a viewfinder is integrally formed at one side of a camcorder body and an object is photographed while being recognized through this viewfinder.

However, in the conventional camcorder, since the viewfinder protrudes to the outside of the camcorder body, the viewfinder easily collides against another object when the camcorder is conveyed and it occupies much space.

Moreover, in the case that the viewfinder is not mounted, since the object is photographed while being recognized through an LCD screen, there is a defect, in that a user cannot concentrate attention on photographing when the LCD screen is exposed to the outside.

### SUMMARY OF THE INVENTION

Therefore, it is an object of the present invention to easily use a camcorder by excluding the interference caused by a viewfinder.

It is another object of the present to miniaturize the size of the camcorder so that the viewfinder can be kept separately when keeping the camcorder.

Yet another object of the present invention is to offer convenience to a user by attaching/detaching the viewfinder according to the necessity.

According to the present invention, a viewfinder assembly comprising a reflecting means at its inside is mounted attachably/detachably so that the reflecting means faces a display screen of a display device located on the body of said camcorder.

Preferably, the display device is rotatable with respect to the camcorder body, and an LCD assembly is used as the display device.

Preferably, the reflecting means is a reflecting mirror which is located to have a predetermined angle to the display screen.

Preferably, a concave lens is located between the reflecting means and the display screen.

Preferably, at a predetermined position at the side of the screen of the display device, a screen change switch is located which is operated when the camcorder body is connected to the viewfinder assembly, and which causes left to right inversion of the image on said display screen to be carried out by software.

Preferably, the viewfinder assembly further comprises a lens assembly for controlling the focus of an image transmitted from the reflecting means.

### BRIEF DESCRIPTION OF THE DRAWINGS

A more complete appreciation of the present invention, and many of the attendant advantages thereof, will become readily apparent as the same becomes better understood by reference to the following detailed description when considered in conjunction with the accompanying drawings in which like reference symbols indicate the same or similar components, wherein;
FIG. 1 is a perspective view illustrating the state that a viewfinder is separated from a camcorder according to the present invention;
FIG. 2 is a perspective view illustrating the state that the viewfinder is connected to the camcorder according to the present invention;
FIG. 3 is a cross-sectional view illustrating the state that the viewfinder and an LCD are connected according to one embodiment of the present invention;
FIG. 4 is a cross-sectional view illustrating the state that the viewfinder and the LCD are connected according to another embodiment of the present invention;
FIG. 5 is a sectional view of a main part illustrating one embodiment of a method for attaching the viewfinder according to the present invention; and
FIGs. 6A to 9B are views illustrating the state of the camcorder which show successively the process of attaching/detaching the viewfinder according to the present invention:

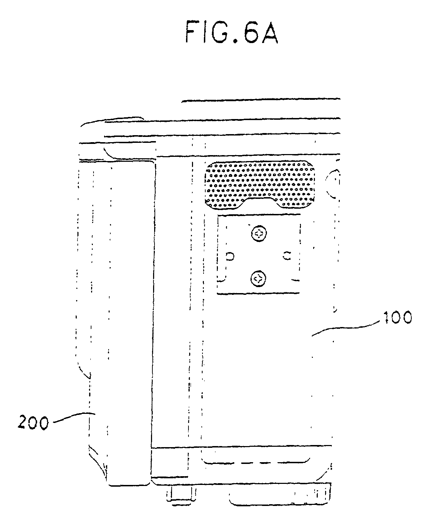

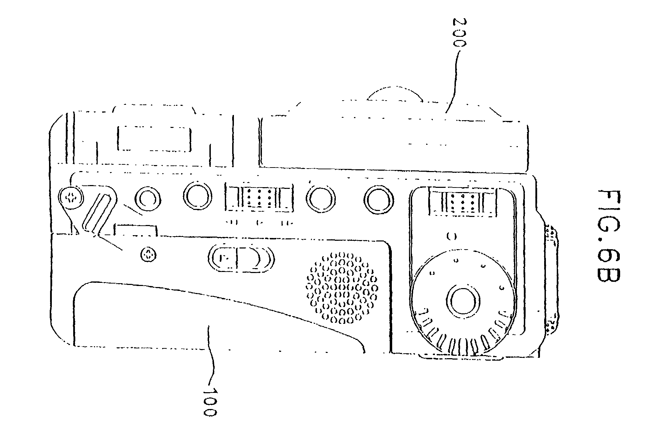

   FIGs. 6A and 6B are plain and front-side views of the camcorder before it is used;

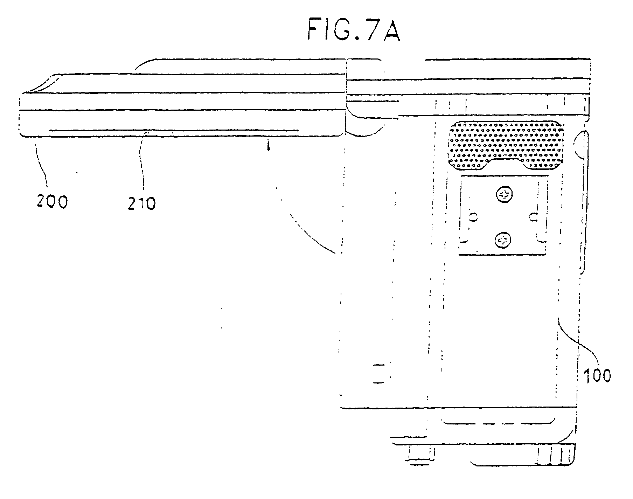

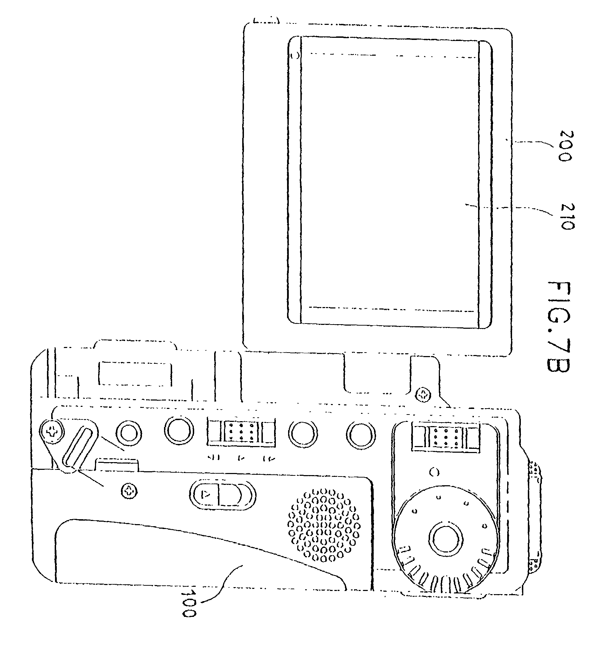

   FIGs. 7A and 7B are plain and front-side views of the camcorder when an LCD screen is opened;

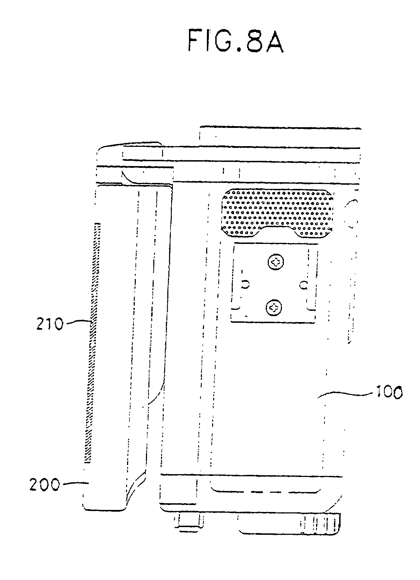

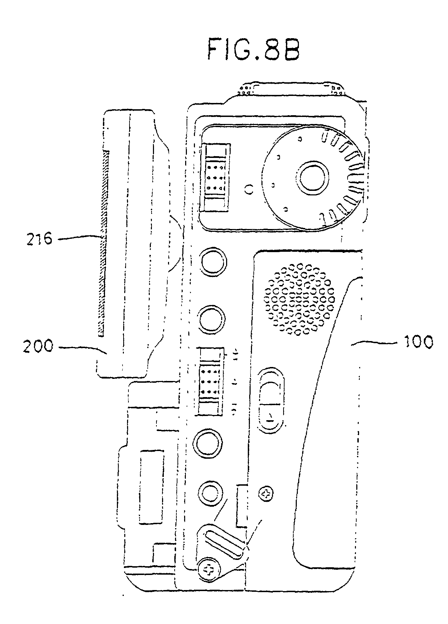

   FIGs. 8A and 8B are plain and front-side views of the camcorder when the LCD screen is rotated by 180 degrees to attach the viewfinder; and

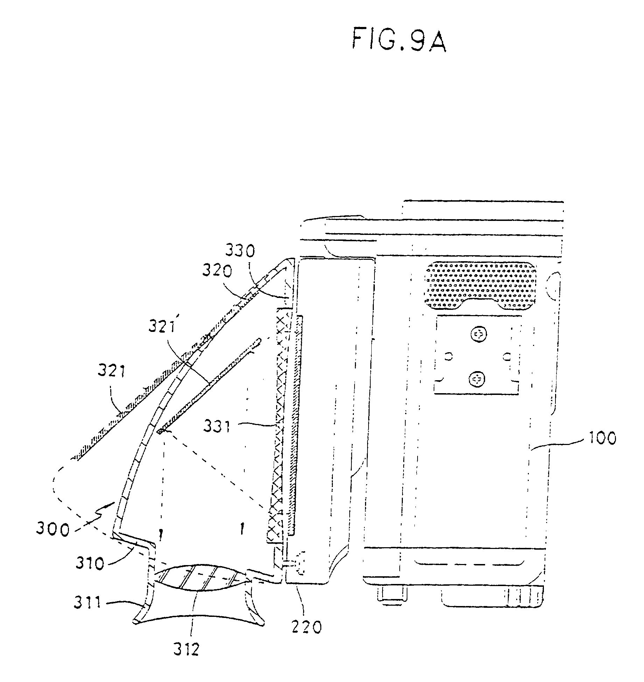

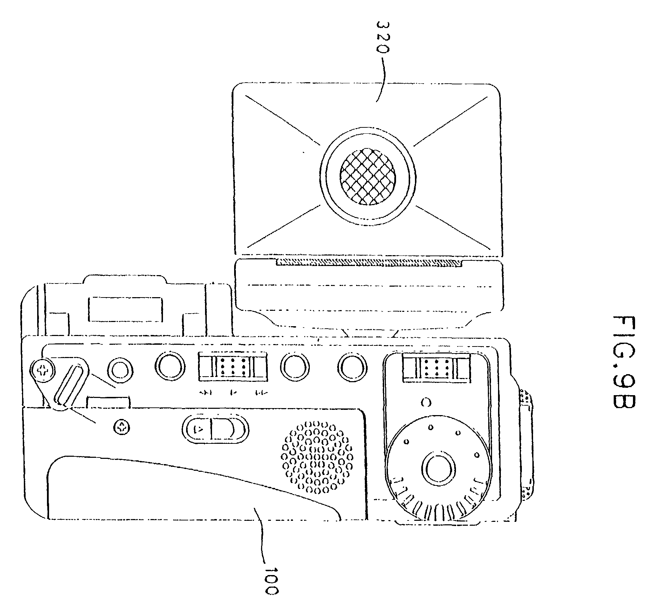

   FIGs. 9A and 9B are plain and front-side views of the camcorder after the viewfinder is attached to the LCD screen.

### DETAILED DESCRIPTION OF THE PREFERRED EMBODIMENTS

The objects, characteristics and advantages of the above-described invention will be more clearly understood through the preferable embodiments referring to the attached drawings.

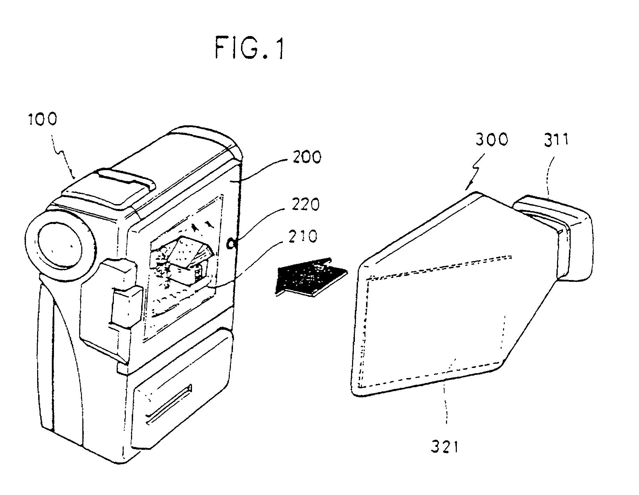

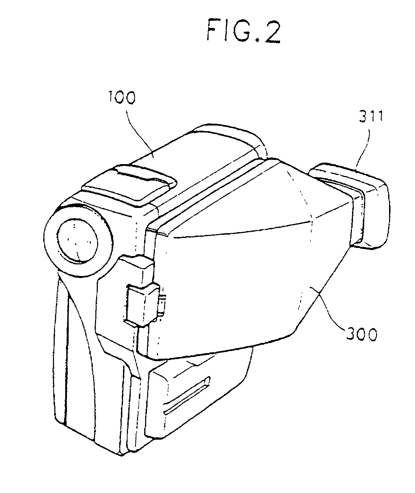

As shown in FIGs. 1 to 5, a viewfinder assembly 300 according to the present invention is mounted attachably/detachably to a camcorder body 100.

According to one embodiment of the present invention, at one side of the camcorder body 100, a predetermined display device, i.e., an LCD assembly in the present embodiment is mounted rotatably by 90 degrees forwards and by 180 degrees about the mounting to the camcorder body. Moreover, an LCD screen 210 is formed at the inner surface of the LCD assembly 200.

The viewfinder assembly 300 attached to the LCD assembly 200 includes: an ocular part 310 having an eyecup 311 and a lens assembly 312; a reflecting unit 320 whose reflecting mirror 321 is located at its inner periphery surface; and a mounting unit 330 facing the LCD screen 210.

At the one end of the LCD screen 210, a screen change switch 220 is provided. When the viewfinder assembly 300 is connected to the LCD assembly 200 and the screen change switch 220 is thereby pressed, right and left sides of the LCD screen 210 are exchanged through software. Accordingly, the shape of an object incident on the eye of a user through the reflecting mirror 321 is the same as the original one and is not changed, since the shape whose right and left sides are changed is changed once again.

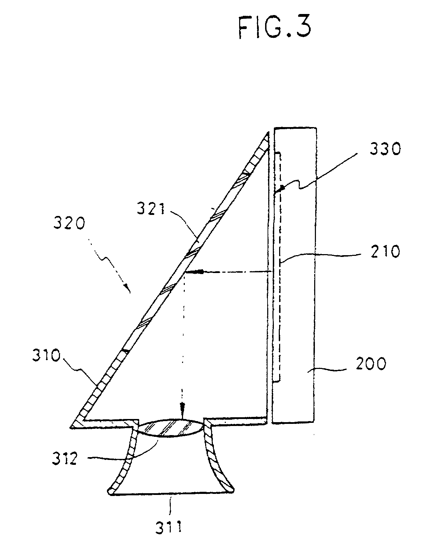

As shown in FIG. 3, as an embodiment of the viewfinder assembly 300, by enlarging the size of the reflecting unit 320 and providing the reflecting mirror 321 having a large area, it is possible to see the object transmitted from the large sized LCD screen 210.

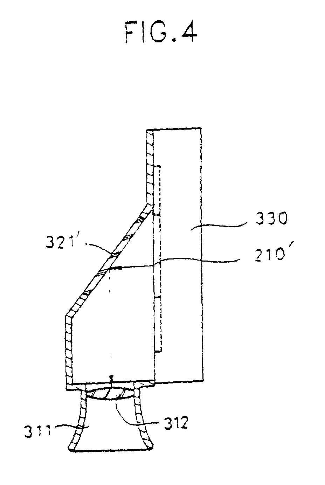

Moreover, as shown in FIG. 4, by manufacturing the viewfinder assembly 300 in a compact size, i.e., by reducing the size of the reflecting unit 320 and providing the reflecting mirror 321' having a small area, it is possible to see the object transmitted from a small sized LCD screen 210'.

As shown in FIG. 9A, in the case of using a small sized viewfinder assembly, it is possible to obtain the same effect by establishing a concave lens 331 at the mounting unit 330 of the viewfinder assembly 300 without reducing the LCD screen 210.

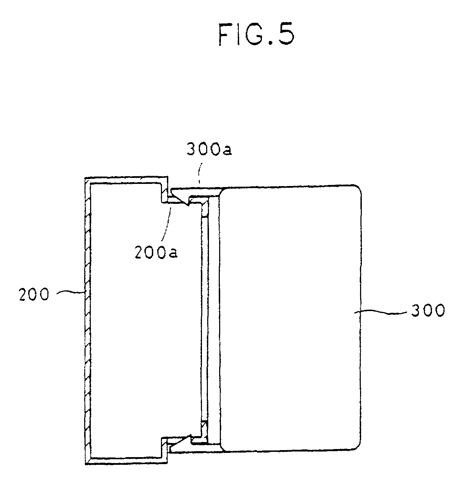

As an attaching/detaching means for connecting/disconnecting the viewfinder assembly 300 to the LCD assembly 200, as shown in FIG. 5, a locking groove 200a is formed at the LCD assembly 200 and a locking projection 300a is formed at the viewfinder assembly 300. In addition, it is possible to provide other various kinds of attaching/detaching means.

The operation of the viewfinder assembly of the camcorder having the above-described structure according to the present invention is explained as follows.

As shown in FIGs. 6A and 6B, the LCD assembly 200 is attached to one side of the camcorder body 100 before the camcorder is used.

In order to use the camcorder, the LCD assembly 200 is rotated by 90 degrees in the forward direction of the camcorder body 100, and the LCD screen 210 is located in front of the user's eye, as shown in FIGs. 7A and 7B. In this state, the user recognizes the object shown in the LCD screen 210.

In the case that this state is inconvenient to photograph the object or in the case of attaching the viewfinder, as shown in FIGs. 8A and 8B, the LCD screen 210 is exposed to the outside by rotating the LCD assembly 200 by 180 degrees.

In this state, as shown in FIGs. 9A and 9B, when the viewfinder assembly 300 is connected to the LCD assembly 200, the image of the object transmitted through the LCD screen 210 comes into the inside of the viewfinder assembly 300 through the mounting unit 330 of the viewfinder assembly 300. After that, the image of the object passes through the lens assembly 312 being reflected on the reflecting mirror 321, and then passes through the eyecup 311, thereby being incident upon the eye of the user. At this time, by controlling the lens assembly 312, it is possible to adjust the focus of the object which is transmitted.

In the case that the concave lens 331 is located at the mounting unit 330 of the viewfinder assembly 300, the object transmitted from the LCD screen 210 is reflected by the small sized reflecting mirror 321' being reduced by the concave lens 331. The image reflected by the reflecting mirror 321' is incident upon the eye of the user through the lens assembly 312.

In the course of attaching the viewfinder assembly 300 to the LCD assembly 200, the image is reflected by the reflecting mirrors 321 and 321' by operating the screen change switch 220 located at one side of the LCD screen 210 of the LCD assembly 200. Since the both sides of this reflected image are changed already when the image is transmitted from the LCD screen 210, the original form of the image is incident upon the eye of the user after both sides of the image are changed by the reflecting mirrors 321 and 321'.

As described above, according to the camcorder of the present invention, it is possible to use the viewfinder by attaching to the LCD assembly in photographing. In the case that the viewfinder is not needed, or when moving and keeping the camcorder, it is possible to separate the viewfinder from the camcorder, thereby providing convenience in photographing and keeping.

Accordingly, when the viewfinder is needed, the viewfinder assembly is attached to the LCD assembly. In addition, the viewfinder is not needed, the photographing is performed using only the LCD screen, thereby offering convenience to the user.

While there have been illustrated and described what are considered to be preferred embodiments of the present invention, it will be understood by those skilled in the art that various changes and modifications may be made, and equivalents may be substituted for elements thereof without departing from the scope of the present invention. In addition, many modifications may be made to adapt a particular situation to the teaching of the present invention without departing from the scope thereof. For example, as the display device, the LCD assembly is explained. However, it is possible to use a PDP or another flat display devices. Therefore, it is intended that the present invention not be limited to the particular embodiment disclosed as the best mode contemplated for carrying out the present invention, but that the present invention includes all embodiments falling within the scope of the appended claims.

## Claims

1. A camcorder (100) in which a viewfinder assembly (300) comprising a reflecting means (321, 321') at its inside is mounted attachably/detachably so that said reflecting means faces a display screen (210, 210') of a display device (200) located on the body of said camcorder.

2. The camcorder of claim 1, wherein said display device (200) is rotatable with respect to said camcorder body.

3. The camcorder of claim 1 or claim 2, wherein said display device (200) is an LCD assembly.

4. The camcorder of any preceding claim, wherein said reflecting means (321, 321') is a reflecting mirror which is located to have a predetermined angle to said display screen (210, 210').

5. The camcorder of any preceding claim, wherein a concave lens (331) is located between said reflecting means (321, 321') and said display screen (210, 210').

6. The camcorder of any preceding claim, wherein, at a predetermined position at the side of the display screen (210, 210') of said display device (200), a screen change switch (220) is located which is operated when said camcorder body is connected to said viewfinder assembly, and which causes left to right inversion of the image on said display screen (210, 210') to be carried out by software.

7. The camcorder of any preceding claim, wherein said viewfinder assembly further comprises a lens assembly (312) for controlling the focus of an image transmitted from said reflecting means.

8. The camcorder of any preceding claim, wherein the means for mounting said viewfinder assembly (300) on said display device includes a locking means (200a, 300a).

## Patentansprüche

1. Ein Kamerarekorder (100), an dem eine Bildsucheranordnung (300), die im Inneren ein Reflexionsmittel (321, 321') aufweist, anbringbar/abnehmbar montiert ist, so dass das Reflexionsmittel einem Bildschirm (210, 210') einer Anzeigevorrichtung (200) zugewandt ist, die sich in dem Körper des Kamerarekorders befindet.

2. Kamerarekorder nach Anspruch 1, wobei die Anzeigevorrichtung (200) in Bezug auf den Kamerarekorderkörper schwenkbar ist.

3. Kamerarekorder nach Anspruch 1 oder Anspruch 2, wobei die Anzeigevorrichtung (200) eine LCD-Anordnung ist.

4. Kamerarekorder nach einem der vorhergehenden Ansprüche, wobei das Reflexionsmittel (321, 321') ein reflektierender Spiegel ist, der angeordnet ist, um einen vorbestimmten Winkel zu dem Bildschirm (210, 210') zu haben.

5. Kamerarekorder nach einem der vorhergehenden Ansprüche, wobei eine konkave Linse (331) zwischen dem Reflexionsmittel (321, 321') und dem Bildschirm (210, 210') angeordnet ist.

6. Kamerarekorder nach einem der vorhergehenden Ansprüche, wobei ein Bildschirmumschalter (220) an einer vorbestimmten Position an der Seite des Bildschirms (210, 210') der Anzeigevorrichtung (200) angeordnet ist, der betätigt wird, wenn der Kamerarekorderkörper mit der Bildsucheranordnung verbunden wird, und der eine Links-Rechts-Umkehr des Bildes auf dem Bildschirm (210, 210') bewirkt, die durch Software ausgeführt wird.

7. Kamerarekorder nach einem der vorhergehenden Ansprüche, wobei die Bildsucheranordnung außerdem eine Linsenanordnung (312) zur Regelung des Fokus von einem Bild, das von dem Reflexionsmittel übertragen wird, aufweist.

8. Kamerarekorder nach einem der vorhergehenden Ansprüche, wobei die Mittel zum Montieren der Bildsucheranordnung (300) an der Anzeigevorrichtung Verriegelungsmittel (200a, 300a) enthalten.

## Revendications

1. Un caméscope (100) dans lequel un assemblage formant viseur (300), comportant à l'intérieur, des moyens réfléchissants (321, 321'), est monté de manière attachable/détachable de sorte que lesdits moyens réfléchissants font face à un écran d'affichage (210, 210') d'un dispositif d'affichage (200) situé sur le boîtier dudit caméscope.

2. Caméscope selon la revendication 1, dans lequel ledit dispositif d'affchage (200) est déplaçable en rotation par rapport audit boîtier du caméscope.

3. Caméscope selon l'une des revendications 1 ou 2, dans lequel ledit dispositif d'affichage (200) est un assemblage LCD.

4. Caméscope selon l'une quelconque des revendications précédentes, dans lequel lesdits moyens réfléchissants (321, 321') sont un miroir réfléchissant disposé de sorte à faire un angle prédéterminé avec ledit écran d'affichage (210, 210').

5. Caméscope selon l'une quelconque des revendications précédentes, dans lequel une lentille concave (331) est disposée entre lesdits moyens réfléchissants (321, 321') et ledit écran d'affichage (210, 210').

6. Caméscope selon l'une quelconque des revendications précédentes, dans lequel, à une position prédéterminée sur le coté de l'écran d'affichage (210, 210') dudit dispositif d'affichage (200), un commutateur de changement d'écran (220) est disposé lequel est actionné lorsque ledit boîtier du caméscope est connecté audit assemblage formant viseur, et déclenche une inversion gauche-droite de l'image sur ledit écran d'affichage (210, 210') réalisée par un logiciel.

7. Caméscope selon l'une quelconque des revendications précédentes, dans lequel ledit assemblage formant viseur comprend en outre un assemblage de lentilles (312) pour contrôler la mise au point d'une image transmise par lesdits moyens réfléchissants.

8. Caméscope selon l'une quelconque des revendications précédentes, dans lequel les moyens pour monter ledit assemblage formant viseur (300) sur ledit dispositif d'affichage incluent des moyens de verrouillage (200a, 300a).
